# EUROPÄISCHE PATENTSCHRIFT

(11) **EP 0 982 188 B1**
(45) Veröffentlichungstag und Bekanntmachung des Hinweises auf die Patenterteilung: **21.12.2005**
(21) Anmeldenummer: 99116172.0
(22) Anmeldetag: 23.08.1999
(51) Int. Cl.: B60P 7/10, B60P 7/12, B60P 7/08

(54) **Lastensicherungssystem für ein Transportfahrzeug und Lastensicherungselement für eine Lastensicherungsschiene eines Transportfahrzeugs**
Load security system for a transport vehicle and a load securing device for a loading rail in a transport vehicle
Système de sécurité pour véhicule de transport et dispositif de fixation sur rails dans un véhicule de transport

(30) Priorität: 21.08.1998 DE 29815075 U
(43) Veröffentlichungstag der Anmeldung: 01.03.2000
(73) Patentinhaber: Kögel Fahrzeugwerke GmbH, 89349 Burtenbach (DE)
(72) Erfinder: Volz, Siegfried, 89610 Oberdischingen (DE)
(74) Vertreter: HOFFMANN EITLE

(56) Entgegenhaltungen:
- DE-B- 1 034 102
- DE-C- 440 915
- DE-U- 29 815 736
- GB-A- 1 007 460
- US-A- 4 653 967
- US-A- 4 717 298
- US-A- 5 076 745

## Beschreibung

Die Erfindung betrifft ein Lastensicherungssystem für ein Transportfahrzeug sowie ein Lastensicherungselement für eine Lastensicherungsschiene eines Transportfahrzeugs.

Eine gattungsgemäßes Lastsicherungselement ist aus der DE 440915 bekannt.

Derartige Lastensicherungselemente und Lastensicherungssysteme werden in Transportfahrzeugen, wie zum Beispiel Lastkraftwagen, Eisenbahnwagen, Flugzeugen und dergleichen verwendet, um transportierte Lasten, d.h. Transportgüter, zum Beispiel gegen Verrutschen auf einer Ladefläche zu sichern bzw. allgemein eine sichernde Rückhaltefunktion auszuüben. Die Lastensicherungselemente werden üblicherweise mit geeigneten Befestigungsmitteln lösbar an Lastensicherungsschienen befestigt, die je nach Ausstattung des Transportfahrzeugs als vertikale und/oder horizontale Seitenwandschienen oder längs- und oder querlaufende Bodenschienen ausgestaltet sind. In bestimmten Anwendungsfällen sind die Lastensicherungsschienen sogar an der Decke eines Transportfahrzeugaufbaus vorgesehen.

Die meisten Lastensicherungsschienen besitzen eine im wesentlichen U-förmige oder C-förmige Querschnittsform oder sind als sog. Lochschienen ausgebildet. Des weiteren sind die Lastensicherungsschienen üblicherweise in die Ladefläche oder die Seitenwände des Transportfahrzeugs eingelassen, so daß ihre Oberseite bündig mit der Lade- oder Wandfläche abschließt. Lastensicherungsschienen der zuvor genannten Art sind zum Beispiel in der US-P 4717298, US-P 5076745, DE 3618420 C2, DE 3326105 C2, GB 2167354 A, DE 9409059 U1 (entsprechend der EP-PS 685380), DE 29510937 U1, DE 9115192 U1, DE 3611837 C1 und DE 3330170 C2 offenbart.

Des weiteren sind aus der DE 29600566 U1, der DE 29700125 U1 und den bereits zuvor genannten Druckschriften DE 9115192 U1 und DE 29510937 U1 Schienensysteme bekannt, die in die Ladefläche eines Transportfahrzeugs eingelassen sind und eine Spur für einen auf der Ladefläche in den Schienen verfahrbaren Schlitten oder eine Laufrollenanordnung bilden, mit dem das Transportgut dann leichter zu laden oder zu entladen ist. Derartige Schienensysteme werden jedoch in der Regel nicht in Verbindung mit Lastensicherungselementen verwendet.

Die vorbekannten Lastensicherungselemente und Lastensicherungssysteme, die in Verbindung mit den hier zu betrachtenden Lastensicherungsschienen eingesetzt werden, sind zumeist nur für eine bestimmte Befestigungsart, zum Beispiel Verzurren, ausgelegt. Das in der DE 3611837 C1 offenbarte Lastensicherungselement beispielsweise besitzt einen in eine C-förmige Lastensicherungsschiene einsetzbaren ankerförmigen Riegelkopf mit einer an einem Ende einer kurzen Stange angebrachten Öse für einen Zurrgurt. Die in der DE 3326105 C2 offenbarten Lastensicherungselemente sind als Gurtschlösser oder Ankerstangen mit einem pilzförmigen Verankerungsende ausgestaltet, die in rechteckige Lochungen oder schlüssellochartige Lochungen einer Lochschiene einhakbar sind. Die DE 3618420 C2 zeigt ein hakenförmiges Lastensicherungselement mit einer Öse für einen Zurrgurt.

Die in der GB 2167354 A gezeigte U-förmige Lastensicherungsschiene wiederum besitzt in die Seitenwände der Schiene eingelassene Querstifte oder schwenkbare Schäkel unter denen hindurch bzw. durch die hindurch ein Zurrgurt geführt werden kann und die damit eine Art Lastensicherungselement bilden.

In der US-P 5076745 ist ein Lastensicherungselementenpaar dargestellt, daß zwei jeweils L-förmige Lastensicherungselemente umfaßt, die das zu sichernde Transportgut zwischen sich aufnehmen und dabei über das Transportgut hinweg mittels Zurrgurten miteinander verspannt sind. Der horizontale Schenkel eines jeweiligen L-förmigen Lastensicherungselementes, der auch die Befestigungsmittel zum Herstellen einer lösbaren Verbindung mit der Lastensicherungsschiene aufweist, liegt dabei auf der Schiene auf, während der vertikale Schenkel an dem Transportgut anliegt. Ein Ende eines jeweiligen Zurrgurtes ist an einem an einem freien Ende des horizontalen Schenkels vorgesehenen Schäkel befestigt und erstreckt sich von diesem schräg nach oben zu einer am oberen Ende des vertikalen Schenkels befindlichen Durchgangsöffnung und durch diese hindurch. Von dort verläuft der Gurt zu der entsprechenden Durchgangsöffnung des gegenüberliegenden zweiten Lastensicherungselementes und dann wieder schräg nach unten zu dem Ende des horizontalen Schenkels des zweiten Lastensicherungselementes, wo er fixiert und verspannt wird.

Aus der US-P 4717298 geht in Verbindung mit C-förmigen Lastensicherungsschienen ein im wesentlichen L-förmiges Lastensicherungselementes hervor, dessen horizontaler und vertikaler Schenkel mit einer an beiden Schenkeln angreifenden schrägen Rippe verstrebt ist. Auf der Seite des vertikalen Schenkels schließt sich ein weiterer L-förmiger Profilabschnitt an, der zusammen mit dem vertikalen Schenkel eine U-förmige Aufnahme für einen Querbalken oder eine Trennwand bildet. Zwei derartige, an voneinander beabstandeten Lastensicherungsschienen befestigte Lastensicherungselemente bilden in Verbindung mit dem mit seinen jeweiligen Endbereichen in die Aufnahmen eingesetzten Querbalken auf der Ladefläche eines Transportfahrzeugs ein Transportgut-Rückhaltesystem mit dem gleichzeitig die Ladefläche in unterschiedliche Ladebereiche partitionierbar ist.

Der Erfindung liegt das technische Problem zugrunde, ein Lastensicherungselement zu schaffen, daß möglichst vielseitig einsetzbar und leicht an verschiedene Transportgüter und Lastenanordnungen anpaßbar ist. Eine weitere Aufgabe der vorliegenden Erfindung ist es, ein geeignetes, mit einem solchen Lastensicherungselement ausgestattetes Lastensicherungssystem für ein Transportfahrzeug bereitzustellen.

Das erstgenannten technische Problem wird gelöst durch ein erfindungsgemäßes Lastensicherungselement mit den Merkmalen des Anspruchs 1.

Dieses Lastensicherungselement für eine Lastensicherungsschiene eines Transportfahrzeugs, insbesondere eines Lastkraftwagens, umfaßt Befestigungsmittel zum Herstellen einer lösbaren Verbindung mit der Lastensicherungsschiene sowie einen mit der Lastensicherungsschiene koppelbaren, im wesentlichen keilförmigen Körper, mit einer der Lastensicherungsschiene zugeordneten Basis; einer geraden ersten Lastenanlagefläche, die sich im wesentlichen rechtwinkelig von einem ersten Endbereich der Basis erstreckt; und einer zweiten Lastenanlagefläche, die sich ausgehend von einem dem ersten Endbereich gegenüberliegenden zweiten Endbereich schräg nach oben in Richtung zur ersten Lastenanlagefläche erstreckt.

Unter einer Lastenanlagefläche ist eine Fläche zu verstehen, die vorzugsweise mit direktem Kontakt an eine zu sichernde Last beziehungsweise ein Transportgut angelegt werden kann. Selbstverständlich kann die Lastfläche auch indirekt an der Last anliegen, zum Beispiel, wenn sich noch ein Zwischenelement zwischen der Last und der Lastenanlagefläche befindet. Die gerade erste Lastenanlagefläche ist vorzugsweise plan. Die schräge zweite Lastenanlagefläche ist vorzugsweise ebenfalls plan ausgebildet, sie kann für bestimmte Anwendungsfälle jedoch auch konkav, konvex oder anderweitig gekrümmt, oder auch mit stufenartigen Absätzen oder anderweitigen Profilierungen und/oder Oberflächenstrukturen versehen sein. Die Neigung der schrägen Lastenanlagefläche und damit der Keilwinkel des keilförmigen Körpers liegt vorzugsweise in einem Bereich von ca. 20° bis 45°, insbesondere aber 30° - 39°. Die Erfindung ist indes nicht ausschließlich auf diese Werte beschränkt. Je nach Bedarf kann von diesen Daten abgewichen werden. Die gerade erste Lastenanlagefläche eignet sich besonders zur Anlage oder Anbringung an plane oder auch gekrümmte, jedoch senkrecht stehende Wandungen oder Teilbereiche einer Last, beispielsweise bei einem quaderförmigen Transportgut oder einem hochkant auf einer ebenen Stirnfläche stehenden zylindrischen Körper. Die schräge zweite Lastenanlagefläche des keilförmigen Körpers hingegen ist besonders zur Anlage an gekrümmte oder kurvenförmige Wandungen oder Teilbereiche einer Last geeignet, zum Beispiel an die gekrümmte Mantelfläche eines liegenden zylindrischen Körpers. Grundsätzlich können natürlich auch noch die Seitenbereiche des keilförmigen Körpers, sofern diese flächig ausgebildet sind, als zusätzliche Lastenanlageflächen fungieren.

Ein einzelnes erfindungsgemäßes Lastensicherungselement ist aufgrund seiner beiden unterschiedlichen Lastenanlageflächen daher gleichzeitig für unterschiedliche Sicherungs- bzw. Befestigungsarten geeignet, ohne daß dafür ein anderer Sicherungselemententyp benötigt wird. Mehrere erfindungsgemäße Lastensicherungselemente lassen sich auf vorteilhafte Art und Weise zu mannigfachen Sicherungsanordnungen kombinieren. Beispielsweise kann ein auf einer Ladefläche eines Transportfahrzeugs in liegender Anordnung befindlicher zylindrischer Körper dadurch gesichert werden, daß zwei erfindungsgemäße Lastensicherungselemente mit ihrer geraden ersten Lastenanlagefläche an die beiden gegenüberliegenden, sich senkrecht zur Ladefläche erstreckenden axialen Stirnflächen des zylindrischen Körpers angelegt werden, wodurch der Körper in seiner Längsrichtung gesichert wird, und daß zwei weitere erfindungsgemäße Lastensicherungselemente jeweils mit ihrer zweiten schrägen Lastenanlagefläche an gegenüberliegende Seiten der zylindrischen Mantelfläche des Körpers angelegt werden, wobei sie gewissermaßen eine prismatische Aufnahme bilden und den Körper in seiner Querrichtung sichern. Die Lastensicherungselemente sind hierbei natürlich in entsprechend beabstandeten Lastensicherungsschienen befestigt. Würde der zuvor genannte zylindrische Körper hingegen hochkant auf einer seiner ebenen Stirnflächen auf der Ladefläche stehen, so könnte die Sicherung beispielsweise durch vier in einer quadratischen Anordnung fixierte erfindungsgemäße Lastensicherungselemente erfolgen, die jeweils mit ihrer ersten geraden Lastenanlagefläche an dem senkrecht zur Ladefläche verlaufenden Außenumfang des zylindrischen Körpers anliegen und den Körper zwischen sich aufnehmen. Auch die gleichzeitige Sicherung von mehreren Lasten ist mit einer geringen Anzahl von erfindungsgemäßen Lastensicherungselementen realisierbar. Das erfindungsgemäße Lastensicherungselement ist somit sehr vielseitig einsetzbar und leicht an verschiedene Transportgüter und Lastenanordnungen anpaßbar.

Weitere vorteilhafte Ausgestaltungsmerkmale des erfindungsgemäßen Lastensicherungselements sind Gegenstand der Unteransprüche 2 bis 14.

Die der Erfindung des weiteren zugrundeliegende Aufgabe wird gelöst durch Lastensicherungssystem für ein Transportfahrzeug mit den Merkmalen des Anspruch 15.

Dieses Lastensicherungssystem besitzt ebenfalls die bereits im Zusammenhang mit dem erfindungsgemäßen Lastensicherungselement erläuterten Vorteile. Die mindestens eine Lastensicherungsschiene des Lastensicherungssystem kann an der Ladefläche und/oder den Seitenwänden und/oder der Decke des Transportfahrzeugs vorgesehen sein.

Weitere vorteilhafte Ausgestaltungsvarianten des erfindungsgemäßen Lastensicherungssystems sind Gegenstand der Unteransprüche 16 bis 19.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert. Es zeigt:
- Fig. 1: eine schematische, teilweise geschnittene Seitenansicht eines erfindungsgemäßen Lastensicherungselementes gemäß einer ersten Ausführungsform;
- Fig. 2: eine schematische Draufsicht des erfindungsgemäßen Lastensicherungselementes von Fig. 1;
- Fig. 3: eine schematische Frontalansicht des erfindungsgemäßen Lastensicherungselementes von Fig. 1;
- Fig. 4: eine schematische Darstellung der Einzelheit X aus Fig. 1;
- Fig. 5: eine schematische Seitenansicht einer ersten, mit erfindungsgemäßen Lastensicherungselementen realisierten Sicherungsanordnung;
- Fig. 6: eine schematische Draufsicht der Sicherungsanordnung von Fig. 5;
- Fig. 7: eine schematische Seitenansicht einer zweiten, mit erfindungsgemäßen Lastensicherungselementen realisierten Sicherungsanordnung;
- Fig. 8: eine schematische Draufsicht der Sicherungsanordnung von Fig. 7; und
- Fig. 9: eine schematische, teilweise geschnittene Draufsicht eines in eine Lochschiene eingesetzten erfindungsgemäßen Lastensicherungselementes gemäß einer zweiten und dritten Ausführungsform.

In der nachfolgenden Beschreibung und in den Figuren werden zur Vermeidung von Wiederholungen gleiche Bauteile und Komponenten auch mit gleichen Bezugszeichen gekennzeichnet, sofern keine weitere Differenzierung erforderlich ist.

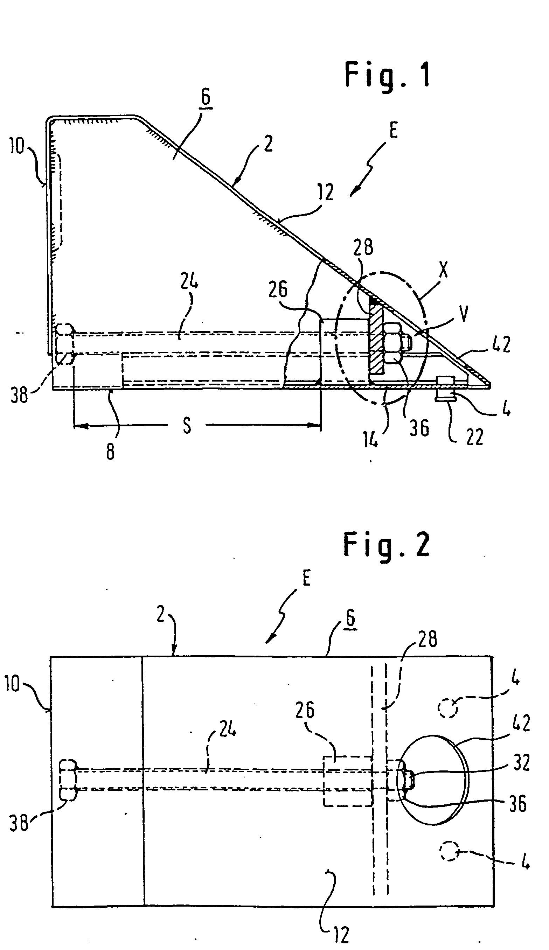

Wie in Fig. 1, 2 und 3 zu erkennen, die eine schematische Darstellung einer ersten Ausführungsform eines erfindungsgemäßen Lastensicherungselementes E in teilweise geschnittener Seitenansicht sowie in Draufsicht und Frontalansicht zeigen, besitzt das Lastensicherungselement E einen im wesentlichen keilförmigen Körper 2, der über Befestigungsmittel 4 lösbar an einer in diesen Figuren nicht gezeigten Lastensicherungsschiene, d.h. im vorliegenden Ausführungsbeispiel einer Lochschiene, fixierbar ist. Der keilförmige Körper 2 besitzt ein als geschweißte Blechkonstruktion ausgeführtes Gehäuse 6. Die untere Seite des Gehäuses 6, welche hier die Basis 8 des keilförmigen Körpers 2 bildet und der Lastensicherungsschiene zugewandt ist, ist unten offen. Des weiteren weist der keilförmige Körper 2 eine gerade erste Lastenanlagefläche 10 auf, die sich im wesentlichen rechtwinkelig von einem ersten, d.h. gemäß der Zeichnung nach Fig. 1 linken Endbereich der Basis 8 senkrecht nach oben erstreckt. Eine zweite Lastenanlagefläche 12 verläuft ausgehend von einem zweiten, sprich dem rechten Endbereich der Basis 8 schräg nach oben in Richtung zur ersten Lastenanlagefläche 10. Die Neigung der schrägen Lastenanlagefläche 12 und damit der Keilwinkel des keilförmigen Körpers 2 beträgt ca. 30° - 39°.

In die Basis 8 des keilförmigen Körpers 2 und im wesentlichen parallel dazu ist eine schienenartig ausgestaltete Grundplatte 14 eingesetzt, die mit ihren Seitenrändern in einer Schienenaufnahme 16 gehalten ist. Die Schienenaufnahme 16 wird gebildet durch zwei an der Basis 8 L-förmig nach innen abgewinkelte Profile 18, welche die Grundplatte 14 an ihren unteren Seitenrändern umgreifen sowie zwei im Innenraum des Körpergehäuses 6 angebrachte längslaufende Profilstücke 20, welche die oberen Seitenränder der Grundplatte 14 umschließen und zusammen mit den abgewinkelten Profilen 18 zwei jeweils seitlich entlang der Basis verlaufende C-förmige Nuten formen, in denen die Grundplatte 14 in Seiten- und Höhenrichtung formschlüssig gehalten ist. Der keilförmige Körper 2 ist auf diese Weise in seiner Längsrichtung auf der schienenartigen Grundplatte 14 verschiebbar. Wie aus der Zeichnung ferner ersichtlich, sind im vorliegenden Fall die zum Herstellen der lösbaren Verbindung mit der Lastensicherungsschiene verwendeten Befestigungsmittel 4 an der Unterseite der Grundplatte 14 angeordnet. Bei diesen Befestigungsmitteln 4 handelt es sich um Stifte oder Bolzen 4, die an ihrem unteren freien Ende mit einem Bundsteg 22 versehen sind, der einen geringfügig größeren Durchmesser als der Stift- oder Bolzenkörper selbst besitzt. Überdies ist der Bundstegdurchmesser etwas kleiner als die Löcher der Lastensicherungsschiene. Die Anordnung der Stifte oder Bolzen 4 an der Grundplatte 14 ist entsprechend auf das Lochraster der Lastensicherungsschiene abgestimmt, so daß das Lastensicherungselement E mit seinen Befestigungsmitteln 4 einfach von oben in die Lastensicherungsschiene eingesetzt werden kann. Die genaue Fixierung des Lastensicherungselementes E an der Lastensicherungsschiene und der zu sichernden Last wird nachfolgend noch detaillierter beschrieben werden.

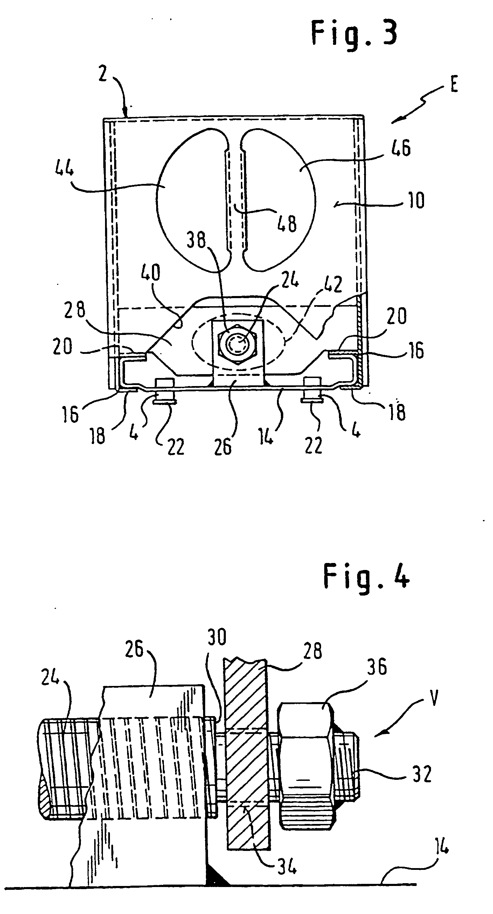

Aus der Fig. 1 und insbesondere der Fig. 4, welche eine schematische Darstellung der Einzelheit X aus Fig. 1 zeigt, geht ferner hervor, daß das erfindungsgemäße Lastensicherungselement E über eine Verstelleinrichtung V verfügt, mit welcher der über die zuvor erläuterte Schienenaufnahme 16 formschlüssig an der Grundplatte 14 gehaltene keilförmige Körper 2 in seiner Längsrichtung relativ zur Grundplatte 14 verschiebbar ist. Die Verstelleinrichtung V umfaßt eine sich im wesentlichen parallel zur Basis 8 und über deren nahezu gesamte Länge mittig im Gehäuse 6 erstreckende selbsthemmende Spindel 24, die in einem fest mit der Grundplatte 14 verbundenen und mit einer Gewindebohrung versehenen Block 26 drehbar gelagert eingeschraubt ist. Der Block 26 ist in der Nähe des zur Keilspitze weisenden Endes der Grundplatte 14 angeordnet, um einen möglichst großen Spindelverstellbereich zu erzielen. Das rechte Ende der Spindel 24 steht mit einem im Gehäuse 6 des keilförmigen Körpers 2 befestigten Mitnehmerelement 28 in Eingriff. Zu diesem Zweck besitzt der Spindelendbereich einen stufenförmigen Absatz 30 mit einem auf einen kleineren Durchmesser reduzierten Spindelende 32, das durch eine im Mitnehmerelement 28 angebrachte Bohrung 34 hindurchgesteckt ist. Die rechte Seite des Spindelabsatzes 30 liegt dabei annähernd an der linken Seite des Mitnehmerelementes 28 an. Das aus dem Mitnehmerelement 28 herausragende Spindelende 32 wiederum verfügt über ein Gewinde, auf das eine Gewindemutter 36 soweit aufgeschraubt ist, daß sie fast an der rechten Seite des Mitnehmerelementes 28 anliegt. In dieser Position ist die Mutter 36 drehfest mit dem Spindelende 32 verschweißt. Das Mitnehmerelement 28 ist also formschlüssig und mit geringem Spiel zwischen dem Spindelabsatz 30 und der Mutter 36 gehalten. Bei einer Drehung der Spindel 24 wird der keilförmige Körper 2 formschlüssig an der Grundplatte 14 und der Spindel 24 gehalten in Abhängigkeit der Spindeldrehrichtung nach links oder rechts auf der Grundplatte 14 verschoben.

Die Betätigung der Spindel 24 erfolgt über mindestens ein an der Spindel 24 vorgesehenes Drehmomenteneinleitungselement.

Im vorliegenden Ausführungsbeispiel verfügt die Spindel 24 über zwei, an ihren beiden axialen Enden positionierte Drehmomenteneinleitungselemente, nämlich zum einen die am rechten Spindelende angeschweißte, zuvor genannte Mutter 36 und zum anderen eine an einem Gewindeabsatz am linken Ende der Spindel 24 angeschweißte zweite Mutter 38. Das Gehäuse 6 weist zwei Durchgangsöffnungen 40, 42 auf, durch die die beiden Spindelmuttern 36, 38 der Spindel 24 von außen zugänglich sind. Die erste Durchgangsöffnung 40 befindet sich hierbei in einem unteren Abschnitt der geraden ersten Lastenanlagefläche 10 und die zweite Durchgangsöffnung 42 in einem unteren Abschnitt der schrägen zweiten Lastenanlagefläche 12. Die Betätigung der Spindel 24 kann mittels einer Kurbel, einer Ratsche oder einem Steckschlüssel erfolgen, die bzw. der entweder von der schrägen 12 oder der geraden Keilfläche 10 her durch eine der Durchgangsöffnungen 40, 42 hindurchgeführt wird und über die Mutter 36 oder 38 ein Drehmoment auf die Spindel 24 überträgt. Auf diese Weise ist die Bedienung und Verstellung des Lastensicherungselementes E auch an schwer zugänglichen Stellen und unabhängig von der jeweils einzusetzenden Lastenanlagefläche 10, 12 möglich.

Wie aus der Zeichnung gemäß Fig. 3 ferner ersichtlich, sind in der geraden ersten Lastenanlagefläche 10 zwei weitere Öffnungen 44, 46 vorgesehen, die jeweils im wesentlichen halbkreisförmig gestaltet, einander gegenüberliegend angeordnet sind und einen Steg 48 zwischen sich ausbilden. Zur Herstellung der Öffnungen 44, 46 ist das Blechmaterial der geraden ersten Lastenanlagefläche halbkreisförmig ausgestanzt und ein im Bereich des Steges 48 belassener Überstand parallel zur Steglängsrichtung nach innen abgekantet. Auf diese Weise ergibt sich eine Grifföffnung mit einem durch den Steg 48 gebildeten Griff, der die Handhabung des Lastensicherungselementes E erleichtert.

Das erfindungsgemäße Lastensicherungselement E besitzt im vorliegenden Fall eine Länge von ca. 37 cm, eine Gesamthöhe von ca. 25 cm und eine Breite von ca. 20 cm. Der durch das Bezugszeichen S angedeutete Spindelverstellbereich in Fig. 1 beträgt ca. 20 cm.

Wie bereits weiter oben angedeutet, wird das Lastensicherungselement E mit seinen Befestigungsmitteln 4 einfach von oben in die Lastensicherungsschiene eingesetzt. Durch eine Betätigung der Spindel 24 kann dann der Keilkörper 2 auf seiner Grundplatte 14 verfahren und paßgenau an die zu sichernde Last bzw. das Transportgut angelegt werden. Gleichzeitig verspannen sich dabei die Befestigungsmittel 4 in ihren Aufnahmen in der Lastensicherungsschiene, so daß ein ungewolltes Loslösen des Lastensicherungselementes E verhindert wird. Der beschriebene Spanneffekt ist besonders wirkungsvoll, wenn zwei einander gegenüberliegende Lastensicherungselemente E die zwischen sich aufgenommene gewissermaßen zwingen- oder schraubstockartig einspannen. Diese Anordnung ist im übrigen der Regelfall. Die Verstellbarkeit der erfindungsgemäßen Lastensicherungselemente E gestattet zudem eine optimale Anpassung an verschiedenartigste Transportgüterformen und Lastenanordnungen, ohne dabei von dem fest vorgegebenen Lochschienenraster der auf der Ladefläche und/oder den Seitenwänden eines Transportfahrzeuges montierten Lastensicherungsschienen abhängig zu sein.

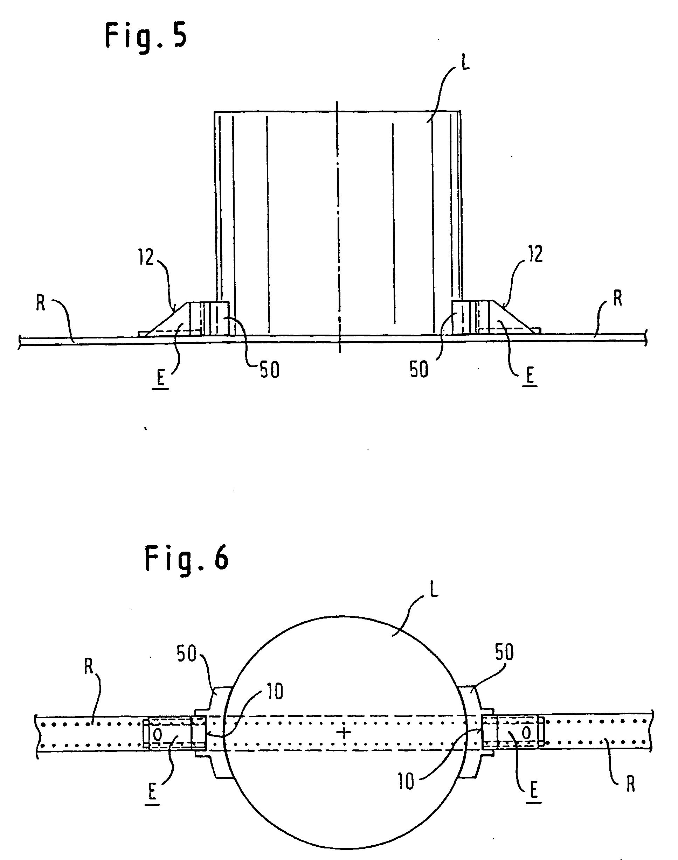

Fig. 5 und 6 zeigen eine schematische Seitenansicht und Draufsicht eines erfindungsgemäßen Lastensicherungssystems mit einer ersten, mit zwei erfindungsgemäßen Lastensicherungselementen E realisierten Sicherungsanordnung, mit der ein hochkant auf einer seiner ebenen Stirnflächen auf einer Ladefläche stehender zylindrischer Körper L (z.B. eine Papierrolle) gesichert wird. Beide Lastensicherungselemente E besitzen jeweils ein klauenartiges Lastensicherungs-Zusatzelement 50, das im Bereich der geraden ersten Lastenanlagefläche 10 über eine Adaptereinrichtung am jeweiligen keilförmigen Körper 2 fixiert ist. Die Lastensicherungselemente E sind einander gegenüberliegend auf einer einzelnen gemeinsamen Lastensicherungsschiene R befestigt und nehmen den zu sichernden zylindrischen Körper L zwischen sich auf. Die geraden ersten Lastenanlageflächen 8 weisen dabei zum Transportgut L und die klauenartigen Lastensicherungs-Zusatzelemente 50, deren Klauenradien im vorliegenden Beispiel jeweils auf den Radius des zylindrischen Körpers L abgestimmt sind und die den Körper L auch seitlich formschlüssig umgreifen, sind an die zylindrische Mantelfläche des Körpers L angelegt. Zusätzlich sind die Lastensicherungselemente E mittels ihrer Verstelleinrichtungen gegeneinander verspannt. Der zylindrische Körper L ist auf diese Weise fest zwischen den Lastensicherungselementen E eingespannt und sowohl in Querals auch in Längsrichtung gesichert. In diesem Beispiel sind die Lastensicherungs-Zusatzelemente 50 also gezielt auf den zu sichernden zylindrischen Körper L abgestimmt. Es wird an dieser Stelle darauf hingewiesen, daß Lastensicherungs-Zusatzelemente natürlich nicht in jedem Anwendungsfall zur Sicherung einer Last erforderlich sind. Gewöhnlich ist die Verwendung von erfindungsgemäßen Lastensicherungselementen E in der Ausgestaltungsform, wie sie in den Fig. 1 bis 4 gezeigt ist, völlig ausreichend. Ebenso sind Sicherungsanordnungen denkbar, bei denen Lastensicherungselemente mit und/oder ohne Lastensicherungs-Zusatzelemente zur Anwendung kommen.

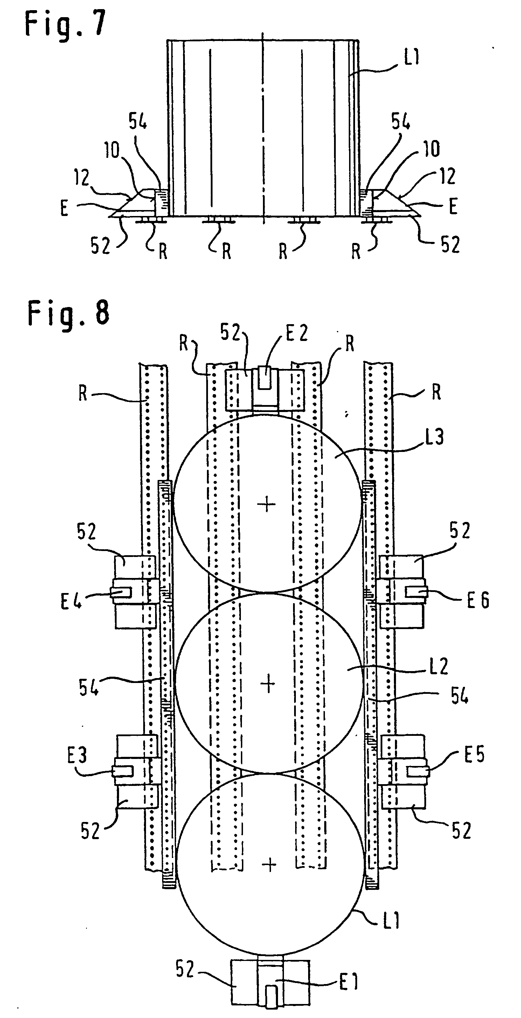

Fig. 7 und 8 zeigen eine schematische Seitenansicht und Draufsicht eines erfindungsgemäßen Lastensicherungssystems mit einer zweiten, mit sechs erfindungsgemäßen Lastensicherungselementen E1 - E6 realisierten Sicherungsanordnung zur gleichzeitigen Sicherung von mehreren Lasten L1 - L3. Der Lastentyp und die Lastenanordnung auf der Ladefläche ist die gleiche wie die in den Fig. 5 und 6 gezeigte, jedoch werden hier drei in Reihe angeordnete zylindrische Körper L1 -L3 gesichert. In Längsrichtung der durch die Lasten L1 - L3 gebildeten Reihenanordnung erfolgt die Sicherung durch zwei gegenüberliegende, gegeneinander verspannte Lastensicherungselemente E1 und E2, deren gerade erste Lastenanlageflächen 10 an der sich senkrecht erstreckenden Mantelfläche des ersten L1 und des letzten zylindrischen Körpers L3 anliegen. Da, wie in Fig. 8 erkennbar, der seitliche Abstand der vorhandenen Lastensicherungsschienen R nicht mit der Anordnung des Transportgutes L1 - L3 und den beiden zuvor genannten Lastensicherungselementen E1, E2 korrespondiert, sind diese jeweils auf einer Adapterplatte 52 montiert, welche den Abstand zwischen zwei benachbarten Lastensicherungsschienen R überbrückt und eine zur Längsachse der Lastenanordnung fluchtende Positionierung der Lastensicherungselemente E1, E2 gestattet. Die seitliche Sicherung der zylindrischen Körper L1- L3 wird mit Hilfe von vier weiteren, jeweils paarweise auf gegenüberliegenden Seiten der Reihenanordnung plazierten Lastensicherungselementen E3 - E6 realisiert. Jeweils zwei (E3, E5 und E4, E6) dieser Lastensicherungselemente liegen mit ihren geraden ersten Lastenanlagefläche 10 an jeweils einem Längsbalken 54 an, der sich wiederum an jedem der drei zylindrischen Körper L1 - L3 abstützt. Alle Lastensicherungselemente E1 - E6 sind mittels ihrer Verstelleinrichtungen gegeneinander verspannt, so daß die zylindrischen Transportgüter L1 -L3 fest zwischen den Lastensicherungselementen E1 -E6 und den beiden Längsbalken 54 eingespannt und zuverlässig sowohl in Quer- als auch in Längsrichtung gesichert sind.

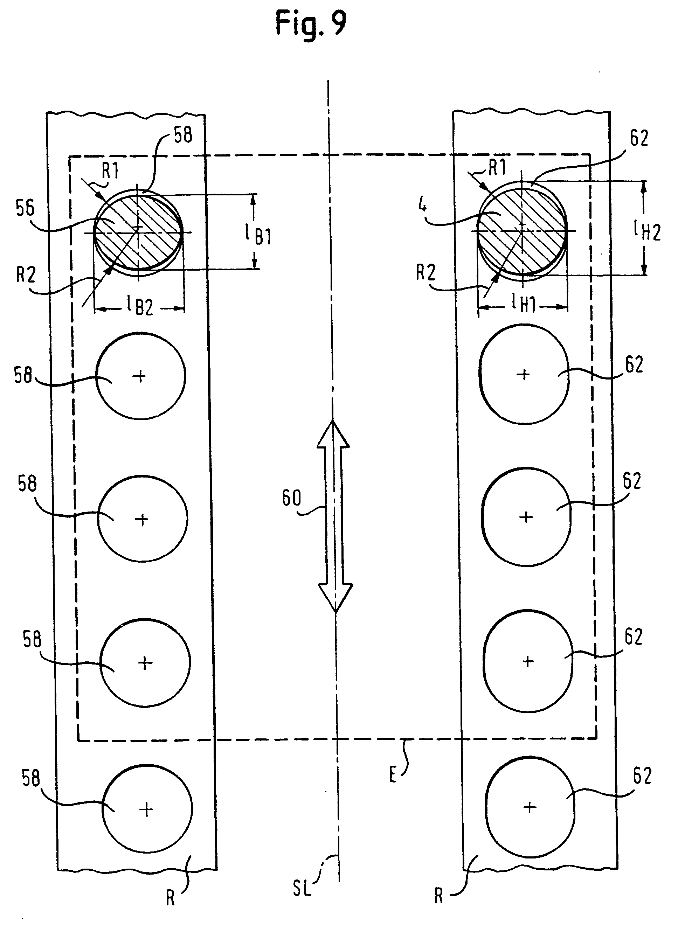

Fig. 9 zeigt eine schematische, teilweise geschnittene Draufsicht eines erfindungsgemäßen, in zwei Lochschienen R eingesetzten Lastensicherungselementes E gemäß einer zweiten und dritten Ausführungsform. Aus Platzgründen ist hierbei die zweite Ausführungsform auf der linken Seite der gestrichelten vertikalen Symmetrielinie SL der Fig. 9 und die dritte Ausführungsform auf der rechten Seite der Symmetrielinie SL dargestellt. Die Konstruktion des Lastensicherungselementes E gemäß der zweiten und dritten Ausführungsform entspricht im wesentlichen der in den Figuren 1 bis 4 gezeigten Version, wobei die Befestigungsmittel des Lastensicherungselementes E wiederum als Befestigungsbolzen 4 bzw. 56 oder Befestigungsstifte ausgestaltet sind, die in die zugeordneten Löcher 58 bzw. 62 der Lochschienen R eingreifen.

Gemäß der zweiten Ausführungsform (linke Seite von Fig. 9) ist der Lochquerschnitt der Löcher 58 kreisförmig. Der Radius der Löcher 58 ist durch das Bezugszeichen R1 gekennzeichnet. Wie in der Zeichnung gut zu erkennen ist, besitzen die diesen runden Löchern zugeordneten Befestigungsbolzen 56 einen ovalen Querschnitt mit einer kurzen Bolzenhalbachse l_{B1} und einer langen Bolzenhalbachse l_{B2}. Die kurze Bolzenhalbachse l_{B1} erstreckt sich in der aus dem Einspannen und Sichern einer Last resultierenden Hauptbelastungsrichtung 60 des Lastensicherungselementes E. Das Verhältnis eines um einen Punkt auf der kurzen Bolzenhalbachse l_{B1} geschlagenen Bolzenradius R2 des Befestigungsbolzen 56 zu dem Lochradius R1 ist so gewählt, daß gilt: R1 = R2 . Durch diese Ausgestaltung und Anordnung des Bolzens 56 sowie das besagte Verhältnis von R1 und R2 wird unter Lasteinwirkung eine besonders günstige Flächenpressung und Krafteinleitung erzielt.

Entsprechend der dritten Ausführungsform (rechte Seite von Fig. 9) sind die Löcher der Lochschiene R als Langlöcher 62 ausgebildet, die eine kurze Lochhalbachse l_{H1} und eine lange Lochhalbachse l_{H2} besitzen. Wie in der Zeichnung zu erkennen ist, erstreckt sich hierbei die lange Lochhalbachse l_{H2} in Hauptbelastungsrichtung 60 der Lochschiene R bzw. des Lastensicherungselementes E. Die für diese Langlöcher 62 vorgesehenen Befestigungsbolzen 4 weisen einen kreisförmigen Querschnitt mit einem Bolzenradius R2 auf. Die sich an den in Längsrichtung erstreckenden Enden der Langlöcher 62 befindlichen Lochabschnitte besitzen einen Lochradius R1. Für das Verhältnis der Radien R1 und R2 gilt: R1 = R2. Durch diese Ausgestaltung und Anordnung der Löcher 62 und Bolzen 4 sowie das besagte Verhältnis von R1 und R2 wird unter Lasteinwirkung eine besonders günstige Flächenpressung und Krafteinleitung erzielt.

Die Erfindung ist nicht auf das obige bevorzugte Ausführungsbeispiel, das lediglich der allgemeinen Erläuterung des Kerngedankens der Erfindung dient, beschränkt. Im Rahmen des Schutzumfangs kann das erfindungsgemäße Lastensicherungselement vielmehr auch eine andere als die oben beschriebene Ausgestaltungsform annehmen. Das Lastensicherungselement kann hierbei insbesondere Merkmale aufweisen, die eine Kombination aus den jeweiligen Einzelmerkmalen der Ansprüche darstellen. Obwohl in den Ausführungsbeispielen nur eine Lastensicherung in Längs- und Querrichtung beschrieben wurde, ist mit dem erfindungsgemäßen Lastensicherungselement grundsätzlich auch eine Lastensicherung in Vertikalrichtung realisierbar, beispielsweise durch Bereitstellung eines hakenförmigen Ansatz an der oberen Kante des keilförmigen Körpers oder dergleichen; der hakenförmigen Ansatz kann dann über einen geeigneten Bereich der Last greifen und diese formschlüssig in Vertikalrichtung halten. Anstelle der oben dargelegten Anordnung der Spindel, des Blocks sowie des Mitnehmerelementes kann auch eine genau umgekehrte Anordnung realisiert werden, d.h. die Spindel und der Block werden am Gehäuse des keilförmigen Körpers und das Mitnehmerelement an der Grundplatte fixiert; die Verstellfunktion als solche bleibt dabei im wesentlichen gleich. Zudem ist es natürlich möglich, das Lastensicherungselement aus anderen geeigneten Werkstoffen, in anderen Abmessungen und für andere Lastensicherungsschienenformen herzustellen. Es ist nicht zwingenderweise erforderlich, den keilförmigen Körper mit einem geschlossenen bzw. weitgehend geschlossenen Gehäuse zu versehen. Ebenso ist eine offene Körperkonstruktion möglich. In Abhängigkeit des jeweiligen Lastensicherungsschienentyps können auch die Befestigungsmittel und/oder Adapterplatten bzw. -elemente anders als oben beschrieben ausgestaltet sein. Je nach Gestalt und Anordnung der zu sichernden Last bzw. des Transportgutes sind zudem andersartig geformte Lastensicherungs-Zusatzelemente denkbar. Das erfindungsgemäße Lastensicherungselement kann zusätzlich mit mindestens einer Sicherungsgurtöse ausgestattet sein, die ein Verzurren mit Gurten ermöglicht. Überdies ist es möglich, daß das Lastensicherungselement eine andere als die oben erläuterte Verstelleinrichtung aufweist, zum Beispiel eine Verstelleinrichtung mit mehreren Spindeln, oder aber anderen mechanischen, hydraulischen oder pneumatischen Stellgliedern usw., sowie dementsprechend andersartigen Drehmomenteneinleitungselementen. Die Verstellrichtung kann, ggf. sogar zusätzlich zur Längsverstellung, beispielsweise auch in Querrichtung des Lastensicherungselementes erfolgen, so daß die oben erwähnten Adapterplatten 52 weitgehend verzichtbar sind. Erfindungsgemäß ist im übrigen vorgesehen, die Neigung der schrägen zweiten Lastenanlagefläche verstellbar auszubilden. Zu diesem Zweck können geeignete Gelenk-und/oder Schwenkeinrichtungen mit korrespondierenden Verstellmechanismen Anwendung finden. Schließlich ist es auch im Sinne der Erfindung, den keilförmigen Körper in mindestens einer bevorzugten Ausführungsform um eine sich senkrecht zur Grundplatte erstreckende Achse drehbar an der Grundplatte zu lagern und in mindestens zwei Drehpositionen formschlüssig mit der Grundplatte zu verriegeln. Auf diese Weise kann der keilförmige Körper zur Benutzung der geraden ersten oder aber der schrägen zweiten Lastenanlagefläche durch eine einfache Drehbewegung umgesetzt werden, ohne dabei das Lastensicherungselement von der Lastensicherungsschiene lösen zu müssen.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 2: Keilförmiger Körper
- 4: Befestigungsmittel (hier: Bolzen / Stifte)
- 6: Gehäuse von 2
- 8: Basis von 2
- 10: Gerade erste Lastenanlagefläche von 2
- 12: Schräge zweite Lastenanlagefläche von 2
- 14: Grundplatte
- 16: Schienenaufnahme
- 18: L-förmige Profile von 6
- 20: Profilstücke
- 22: Bundsteg von 4
- 24: Spindel
- 26: Block mit Gewindebohrung
- 28: Mitnehmerelement von 2 bzw. 6
- 30: stufenförmiger Absatz von 24
- 32: Spindelende mit geringerem Durchmesser
- 34: Bohrung in 28
- 36: Mutter / Drehmomenteneinleitungselement
- 38: Mutter / Drehmomenteneinleitungselement
- 40: Durchgangsöffnung in 10
- 42: Durchgangsöffnung in 12
- 44: Öffnung, halbkreisförmig
- 46: Öffnung, halbkreisförmig
- 48: Steg / Griff
- 50: Lastensicherungs-Zusatzelemente
- 52: Adapterplatte(n)
- 54: Längsbalken
- 56: Befestigungsmittel (Befestigungsbolzen)
- 58: Löcher von R
- 60: Hauptbelastungsrichtung
- 62: Langlöcher von R
- E: Lastensicherungselement(e)
- l_{B1}: Kurze Halbachse von 56
- l_{B2}: Lange Halbachse von 56
- l_{H1}: Kurze Halbachse von 62
- l_{H2}: Lange Halbachse von 62
- L: Zu sichernde Last / Transportgut
- L1- L3: Zu sichernde Lasten / Transportgüter
- R: Lastensicherungsschiene(n) / Lochschiene(n)
- R1: Lochradius von 58 bzw. von Abschnitten von 62
- R2: Bolzenradius von 4 bzw. 56
- S: Verstellbereich von V bzw. 24
- SL: Symmetrielinie SL
- V: Verstelleinrichtung

## Patentansprüche

1. Lastensicherungselement (E; E1 - E6) für eine Lastensicherungsschiene (R) eines Transportfahrzeugs, umfassend Befestigungsmittel (4, 56) zum Herstellen einer lösbaren Verbindung mit der Lastensicherungsschiene (R) sowie einen mit der Lastensicherungsschiene (R) koppelbaren (4, 56), im wesentlichen keilförmigen Körper (2, 6), **gekennzeichnet durch**
- eine der Lastensicherungsschiene (R) zugeordnete Basis (8, 14),
- eine gerade erste Lastenanlagefläche (10), die sich im wesentlichen rechtwinkelig von einem ersten Endbereich der Basis (8, 14) erstreckt, und
- eine zweite Lastenanlagefläche (12), die sich, ausgehend von einem dem ersten Endbereich der Basis gegenüberliegenden zweiten Endbereich, schräg nach oben in Richtung zur ersten Lastenanlagefläche (10) erstreckt.

2. Lastensicherungselement nach Anspruch 1,
**gekennzeichnet durch**
- eine die Befestigungsmittel (4, 56) tragende Grundplatte (14), die sich im wesentlichen parallel zur Basis (8) erstreckt, und
- eine Verstelleinrichtung (V, 24, 26, 28, 36, 38), mit welcher der keilförmige Körper (2) formschlüssig gehalten (16) relativ zur Grundplatte (14) verschiebbar ist.

3. Lastensicherungselement nach Anspruch 2,
**dadurch gekennzeichnet, daß**
die Verstelleinrichtung (V) mindestens eine sich im wesentlichen parallel zur Basis (8, 14) erstreckende Spindel (24), die an der Grundplatte (14) oder dem keilförmigen Körper (2, 6) drehbar gelagert (26) ist und wenigstens ein Drehmomenteneinleitungselement (36, 38) aufweist, und die mit wenigstens einem am keilförmigen Körper (2, 6) oder an der Grundplatte (14) befestigten Mitnehmerelement (28) in Eingriff steht, so daß bei einer Drehung der Spindel (24) der keilförmige Körper (2, 6) formschlüssig gehalten (16) relativ zur Grundplatte (14) verschoben wird.

4. Lastensicherungselement nach Anspruch 2 oder 3,
**dadurch gekennzeichnet, daß**
der keilförmige Körper (2) ein Gehäuse (6) besitzt, in dem die Spindel (24) angeordnet ist, wobei das Gehäuse (6) mindestens eine Durchgangsöffnung (40, 42) aufweist, durch die das wenigstens eine Drehmomenteneinleitungselement (36, 38) der Spindel (24) von außen zugänglich ist.

5. Lastensicherungselement nach Anspruch 4,
**dadurch gekennzeichnet, daß**
die Spindel (24) an ihren beiden axialen Enden mit jeweils einem Drehmomenteneinleitungselement (36, 38) versehen ist, und die gerade erste Lastenanlagefläche (10) eine erste Durchgangsöffnung (40) aufweist, durch die das erste Drehmomenteneinleitungselement (38) von außen zugänglich ist, und die schräge zweite Lastenanlagefläche (12) eine zweite Durchgangsöffnung (42) aufweist, durch die das zweite Drehmomenteneinleitungselement (36) von außen zugänglich ist.

6. Lastensicherungselement nach einem oder mehreren der vorhergenannten Ansprüche,
**dadurch gekennzeichnet, daß**
der keilförmige Körper (2, 6) um eine sich senkrecht zur Grundplatte erstreckende Achse drehbar an der Grundplatte (14) gelagert und in mindestens zwei Drehpositionen formschlüssig mit der Grundplatte (14) verriegelbar ist.

7. Lastensicherungselement nach einem oder mehreren der vorhergenannten Ansprüche,
**dadurch gekennzeichnet, daß**
die Grundplatte (14) schienenartig ausgestaltet und in einer im Bereich der Basis (8) des keilförmigen Körpers (2, 6) ausgebildeten Schienenaufnahme (16, 18, 20) formschlüssig gehalten ist, so daß der keilförmige Körper (2, 6) auf der Grundplatte (14) verschiebbar ist.

8. Lastensicherungselement nach einem oder mehreren der vorhergenannten Ansprüche,
**dadurch gekennzeichnet, daß**
im Bereich der geraden ersten Lastenanlagefläche (10) und/oder im Bereich der schrägen zweiten Lastenanlagefläche (12) eine Adaptereinrichtung zum Anbringen eines Lastensicherungs-Zusatzelementes (50) vorgesehen ist.

9. Lastensicherungselement nach einem oder mehreren der vorhergenannten Ansprüche,
**dadurch gekennzeichnet, daß**
die Neigung der schrägen zweiten Lastenanlagefläche (12) verstellbar ist.

10. Lastensicherungselement nach einem oder mehreren der vorhergenannten Ansprüche,
**dadurch gekennzeichnet, daß**
dieses mit wenigstens einer Sicherungsgurtöse ausgestattet ist.

11. Lastensicherungselement nach einem oder mehreren der vorhergenannten Ansprüche,
**dadurch gekennzeichnet, daß**
die Befestigungsmittel wenigstens einen Befestigungsbolzen (4, 56) aufweisen, der mit der Lastensicherungsschiene (R) in Eingriff bringbar ist.

12. Lastensicherungselement nach Anspruch 11,
**dadurch gekennzeichnet, daß**
der Befestigungsbolzen (56) einen ovalen Querschnitt mit einer kurzen Bolzenhalbachse (l_{B1}) und einer langen Bolzenhalbachse (l_{B2}) aufweist.

13. Lastensicherungselement nach Anspruch 12,
**dadurch gekennzeichnet, daß**
sich die kurze Bolzenhalbachse (l_{B1}) in Hauptbelastungsrichtung (60) des Lastensicherungselementes (E) erstreckt.

14. Lastensicherungselement nach Anspruch 12 oder 13,
**dadurch gekennzeichnet, daß**
für das Verhältnis eines um einen Punkt auf der kurzen Bolzenhalbachse (l_{B1}) geschlagenen Bolzenradius R2 zu einem Lochradius R1 eines dem Befestigungsbolzen (56) zuzuordnenden kreisförmigen Loches (58) einer als Lochschiene ausgebildeten Lastensicherungsschiene (R) gilt: R1 = R2.

15. Lastensicherungssystem für ein Transportfahrzeug, umfassend
- mindestens ein Lastensicherungselement (E) nach einem der Ansprüche 1 bis 14,
- mindestens eine Lastensicherungsschiene (R), an der das Lastensicherungselement (E) lösbar zu befestigen ist.

16. Lastensicherungssystem nach Anspruch 15,
**dadurch gekennzeichnet, daß**
die Lastensicherungsschiene eine Lochschiene (R, 58, 62) mit einem auf die Befestigungsbolzen (4, 56) des Lastensicherungselementes (E) abgestimmten Lochraster ist.

17. Lastensicherungssystem nach Anspruch 15 oder 16,
**dadurch gekennzeichnet, daß**
die Löcher der Lochschiene (R) als Langlöcher (62) ausgebildet sind, die eine kurze Lochhalbachse (l_{H1}) und eine lange Lochhalbachse (l_{H2}) besitzen.

18. Lastensicherungssystem nach Anspruch 17,
**dadurch gekennzeichnet, daß**
die sich die lange Lochhalbachse (l_{H2}) in Hauptbelastungsrichtung (60) der Lochschiene (R) und/oder des Lastensicherungselementes (E) erstreckt.

19. Lastensicherungssystem nach Anspruch 17 oder 18,
**dadurch gekennzeichnet, daß**
die den Langlöchern (62) zugeordneten Befestigungsbolzen (4) einen kreisförmigen Querschnitt mit einem Bolzenradius R2 aufweisen, und die sich an den in Längsrichtung erstreckenden Enden der Langlöcher (62) befindlichen Lochabschnitte einen Lochradius R1 besitzen, wobei für das Verhältnis der Radien R1 und R2 gilt: R1 = R2.

## Claims

1. Load securing element (E; E1 - E6) for a load securing rail (R) on a transport vehicle comprising fastening means (4, 56) for establishing a detachable connection to the load securing rail (R) and a substantially wedge-shaped member (2, 6) couplable (4, 56) to the load securing rail (R),
**characterised by**
- a base (8, 14) associated with the load securing rail (R),
- a straight first load contact surface (10) which extends substantially at right angles from a first end region of the base (8, 14), and
- a second load contact surface (12) which proceeding from a second end region opposite the first end region of the base extends upwards at a slope in the direction of the first load contact surface (10).

2. Load securing element according to claim 1, **characterised by**
- a base plate (14) carrying the fastening means (4, 56) which extends substantially parallel to the base (8) and
- an adjusting device (V, 24, 26, 28, 36, 38) by means of which the wedge-shaped member (2) held in form-fitting manner (16) is displaceable relative to the base plate (14).

3. Load securing element according to claim 2, **characterised in that** the adjusting device (V) possesses at least one spindle (24) extending substantially parallel to the base (8, 14), which spindle is mounted rotatably (26) on the base plate (14) or the wedge-shaped member (2, 6) and has at least one torque initiating element (36, 38) and which spindle is in engagement with at least one driver element (228) fastened to the wedge-shaped member (2, 6) or to the base plate (14) so that on turning the spindle (24) the wedge-shaped member (2, 6) held in form-fitting manner (16) is displaced relative to the base plate (14).

4. Load securing element according to claim 2 or 3, **characterised in that** the wedge-shaped member (2) possesses a housing (6) in which the spindle (24) is disposed, wherein the housing (6) has at least one access opening (40, 42) through which the at least single torque initiating element (36, 38) of the spindle (24) is accessible from the outside.

5. Load securing element according to claim 4, **characterised in that** at each of its two axial ends the spindle (24) is provided with a torque initiating element (36, 38) and the straight first load contact surface (10) possesses a first access opening (40) through which the first torque initiating element (38) is accessible from the outside and the sloping second load contact surface (12) has a second access opening (42) through which the second torque initiating element (36) is accessible from the outside.

6. Load securing element according to one or more of the preceding claims, **characterised in that** the wedge-shaped member (2, 6) is mounted rotatably on the base plate (14) about an axis extending perpendicular to the base plate (14) and is lockable in form-fitting manner with the base plate (14) in at least two rotational positions.

7. Load securing element according to one or more of the preceding claims, **characterised in that** the base plate (14) is of rail-like design and is held in form-fitting manner in a rail receptacle (16, 18, 20) constructed in the region of the base (8) of the wedge-shaped member (2, 6) so that the wedge-shaped member (2, 6) is displaceable on the base plate (14).

8. Load securing element according to one or more of the preceding claims, **characterised in that** in the region of the straight first load contact surface (10) and/or in the region of the sloping second load contact surface (12) an adapter device for attaching a load securing accessory element (50) is provided.

9. Load securing element according to one or more of the preceding claims, **characterised in that** the inclination of the sloping second load contact surface (12) is adjustable.

10. Load securing element according to one or more of the preceding claims, **characterised in that** said load securing element is equipped with at least one securing belt eyelet.

11. Load securing element according to one or more of the preceding claims, **characterised in that** the fastening means possess at least one fastening bolt (4, 56) which can be brought into engagement with the load securing rail (R).

12. Load securing element according to claim 11, **characterised in that** the fastening bolt (56) has an oval cross-section having a short bolt semi-axis (l_{B1}) and a long bolt semi-axis (l_{B2}).

13. Load securing element according to claim 12, **characterised in that** the short bolt semi-axis (I_{B1}) extends in the principal loading direction (60) of the load securing element (E).

14. Load securing element according to claim 12 or 13, **characterised in that** the relationship between a bolt radius R2 described about a point on the short bolt semi-axis (l_{B1}) and a hole radius R1 of a circular hole (58) to be assigned to the fastening bolt (56) in a load securing rail (R) constructed as a perforated rail is given by: R1 = R2.

15. Load securing system for a transport vehicle comprising
- at least one load securing element (E) according to any of claims 1 to 14 and
- at least one load securing rail (R) to which the load securing element (E) is to be detachably fastened.

16. Load securing system according to claim 15, **characterised in that** the load securing rail is a perforated rail (R, 58, 62) having a hole grid matched to the fastening bolts (4, 56) of the load securing element (E).

17. Load securing system according to claim 15 or 16, **characterised in that** the holes in the perforated rail (R) are constructed in the form of elongated holes (62) which have a short hole semi-axis (1_{H1}) and a long hole semi-axis (1_{H2}) .

18. Load securing system according to claim 17, **characterised in that** the long hole semi-axis (1_{H2}) extends in the principal loading direction (60) of the perforated rail (R) and/or of the load securing element (E).

19. Load securing system according to claim 17 or 18, **characterised in that** the fastening bolts (4) assigned to the elongated holes (62) possess a circular cross-section having a bolt radius R2 and the hole sections located at the ends of the elongated holes (62) extending in the longitudinal direction have a hole radius R1, wherein the relationship between the radii R1 and R2 is given by: R1 = R2.

## Revendications

1. Elément de sécurité de charge (E ; E1 - E6) pour un rail de sécurité de charge (R) d'un véhicule de transport comprenant des moyens de fixation (4, 56) pour la réalisation d'un assemblage amovible avec le rail de sécurité de charge (R), ainsi qu'un corps (2, 6) essentiellement cunéiforme pouvant être couplé (4, 56) avec le rail de sécurité de charge (R), **caractérisé par** :
- une base (8, 14) associée au rail de sécurité de charge (R),
- une première surface de placement de charge (10) droite qui s'étend essentiellement perpendiculairement à une première zone finale de la base (8, 14), et
- une deuxième surface de placement de charge (12) qui s'étend, à partir de la deuxième zone finale située à l'opposé de la première zone finale de la base, en diagonale vers le haut en direction de la première surface de placement de charge (10).

2. Elément de sécurité de charge selon la revendication 1,
**caractérisé par** :
- un socle (14) soutenant les moyens de fixation (4, 56) qui s'étend essentiellement parallèlement à la base (8), et
- un dispositif de réglage (V, 24, 26, 28, 36, 38) avec lequel le corps (2) cunéiforme est déplaçable relativement au socle (14) en étant maintenu mécaniquement (16).

3. Elément de sécurité de charge selon la revendication 2,
**caractérisé en ce que** :
- le dispositif de réglage (V) comprend au moins une broche (24) s'étendant essentiellement parallèlement à la base (8, 14) et logée de façon rotative (26) au niveau du socle (14) ou du corps (2, 6) cunéiforme et au moins un élément d'introduction de couple (36, 38), et il est engrené avec au moins un élément entraîneur (28) fixé au niveau du corps (2, 6) cunéiforme ou du socle (14) de telle façon que lors d'une rotation de la broche (24), le corps (2, 6) cunéiforme est déplacé relativement au socle (14) en étant maintenu mécaniquement (16).

4. Elément de sécurité de charge selon la revendication 2 ou 3,
**caractérisé en ce que**
le corps cunéiforme (2) possède un boîtier (6) dans lequel la broche (24) est disposée, le boîtier (6) comprenant au moins une ouverture de passage (40, 42) par laquelle l'au moins un élément d'introduction de couple (36, 38) de la broche (24) est accessible de l'extérieur.

5. Elément de sécurité de charge selon la revendication 4,
**caractérisé en ce que**
la broche (24) est munie au niveau de ses deux extrémités axiales d'un élément d'introduction de couple (36, 38) et la première surface de placement de charge (10) droite comprend une première ouverture de passage (40) par laquelle le premier élément d'introduction de couple (38) est accessible de l'extérieur, et la deuxième surface de placement de charge (12) inclinée comprend une deuxième ouverture de passage (42) par laquelle le deuxième élément d'introduction de couple (36) est accessible de l'extérieur.

6. Elément de sécurité de charge selon une ou plusieurs des revendications précédentes,
**caractérisé en ce que**
le corps (2, 6) cunéiforme est logé de façon rotative au niveau du socle (14) autour d'un axe s'étendant verticalement par rapport au socle et peut être bloqué mécaniquement avec le socle (14) dans au moins deux positions de rotation.

7. Elément de sécurité de charge selon une ou plusieurs des revendications précédentes,
**caractérisé en ce que**
le socle (14) est sous forme de rail et est maintenu mécaniquement dans un logement pour rail (16, 18, 20) réalisé dans la zone de la base (8) du corps (2, 6) cunéiforme de telle façon que le corps (2, 6) cunéiforme est déplaçable sur le socle (14).

8. Elément de sécurité de charge selon une ou plusieurs des revendications précédentes,
**caractérisé en ce que**
dans la zone de la première surface de placement de charge (10) droite et/ou dans la zone de la deuxième surface de placement de charge (12) inclinée, un dispositif adaptateur est prévu pour installer un élément supplémentaire de sécurité de charge (50).

9. Elément de sécurité de charge selon une ou plusieurs des revendications précédentes,
**caractérisé en ce que**
l'inclinaison de la deuxième surface de placement de charge (12) inclinée est réglable.

10. Elément de sécurité de charge selon une ou plusieurs des revendications précédentes,
**caractérisé en ce que**
celui-ci est équipé d'au moins une boucle pour ceinture de sécurité.

11. Elément de sécurité de charge selon une ou plusieurs des revendications précédentes
**caractérisé en ce que**
les moyens de fixation comprennent au moins un boulon de serrage (4, 56) qui peut être mis en prise avec le rail de sécurité de charge (R).

12. Elément de sécurité de charge selon la revendication 11,
**caractérisé en ce que**
le boulon de serrage (56) présente une coupe transversale ovale avec un demi-axe de boulon (L_{B1}) court et un demi-axe de boulon (L_{B2}) long.

13. Elément de sécurité de charge selon la revendication 12,
**caractérisé en ce que**
le demi-axe de boulon (L_{B1}) court s'étend dans la direction de charge principale (60) de l'élément de sécurité de charge (E).

14. Elément de sécurité de charge selon la revendication 12 ou 13,
**caractérisé en ce que**
pour le rapport d'un rayon de boulon R2, décrit autour d'un point sur le demi-axe de boulon (L_{B1}) court, par rapport à un rayon de trou R1 d'un trou (58) circulaire à associer au boulon de serrage (56) d'un rail de sécurité de charge (R) formé comme un rail perforé, on a : R1 = R2.

15. Système de sécurité de charge pour un véhicule de transport comprenant :
- au moins un élément de sécurité de charge (E) selon une des revendications 1 à 14,
- au moins un rail de sécurité de charge (R) auquel l'élément de sécurité de charge (E) est à fixer de façon amovible.

16. Système de sécurité de charge selon la revendication 15,
**caractérisé en ce que**
le rail de sécurité de charge est un rail perforé (R, 58, 62) avec une grille de trou ajustée sur les boulons de serrage (4, 56) de l'élément de sécurité de charge (E).

17. Système de sécurité de charge selon la revendication 15 ou 16,
**caractérisé en ce que**
les trous du rail perforé (R) sont réalisés en trous oblongs (62) qui possèdent un demi-axe de trou (I_{H1}) court et un demi-axe de trou (I_{H2}) long.

18. Système de sécurité de charge selon la revendication 17,
**caractérisé en ce que**
le demi-axe de trou (I_{H2}) long s'étend dans la direction de charge principale (60) du rail à trou (R) et/ou de l'élément de sécurité de charge (E).

19. Système de sécurité de charge selon la revendication 17 ou 18,
**caractérisé en ce que**
les boulons de serrage (4) associés aux trous oblongs (62) présentent une coupe transversale circulaire avec un rayon de boulon R2 et les sections de trou se trouvant au niveau des extrémités des trous oblongs (62) s'étendant en direction de la longueur, possèdent un rayon de trou R1, et le rapport des rayons R1 et R2 vaut: R1 = R2.
